# FASCICULE DE BREVET EUROPEEN

(11) **EP 1 127 722 B1**
(45) Date de publication et mention de la délivrance du brevet: **02.11.2006**
(21) Numéro de dépôt: 01460012.6
(22) Date de dépôt: 20.02.2001
(51) Int. Cl.: B60J 1/20, B60J 7/00

(54) **Dispositif d'occultation d'une vitre et/ou d'une baie de véhicule, mettant en oeuvre des baleines, et véhicule correspondant**
Verdunkelungseinrichtung für Fenster und/oder für Fahrzeugöffnung mit Anwendung von Stangen, und korrespondierendes Fahrzeug
Shading device for window and/or for vehicle opening, using ribs, and corresponding vehicle

(30) Priorité: 25.02.2000 FR 0002429; 09.05.2000 FR 0005904
(43) Date de publication de la demande: 29.08.2001
(73) Titulaire: WAGON SAS, 79300 Bressuire (FR)
(72) Inventeur: Jolivet, M. David, 79300 Bressuire (FR)
(74) Mandataire: Vidon, Patrice

(56) Documents cités:
- DE-A- 4 041 341
- DE-C- 19 745 866
- DE-U- 29 512 889
- US-A- 4 867 220
- US-A- 6 015 184
- PATENT ABSTRACTS OF JAPAN vol. 013, no. 052 (M-794), 7 février 1989 (1989-02-07) & JP 63 258213 A (ASHIMORI IND CO LTD), 25 octobre 1988 (1988-10-25)

## Description

Le domaine de l'invention est celui des véhicules automobiles, et notamment des véhicules présentant une surface vitrée importante, en particulier au niveau du pavillon. Plus précisément, l'invention concerne l'occultation de telles surfaces vitrées, notamment pour se protéger des rayons du soleil.

La tendance actuelle, en matière de véhicule automobile, est de proposer de plus en plus de surfaces vitrées. Ainsi, notamment, on a proposé des véhicules présentant un pavillon équipé d'un ou plusieurs éléments vitrés. Dans certains cas, l'intégralité du pavillon est en verre ou en un matériau similaire laissant passer les rayons du soleil.

On a également proposé des surfaces vitrées multiples, par exemple sous la force de deux ou trois éléments, dont certains peuvent former toits ouvrants. De la même façon, des surfaces vitrées importantes peuvent être prévues sur d'autres parties du véhicule, et par exemple à l'arrière, notamment lorsque le véhicule est équipé d'un hayon.

On comprend aisément qu'il est alors nécessaire de prévoir des moyens d'occultation, pour protéger l'habitacle et ses occupants du soleil. Lorsque le pavillon est équipé d'un toit ouvrant, on a pensé à l'équiper d'un volet rigide, pouvant coulisser dans le pavillon. Cette solution pourrait éventuellement être étendue au cas où plusieurs zones vitrées existent, sous réserve qu'il reste suffisamment d'espace dans le pavillon pour dissimuler les volets lorsque ceux-ci ne sont pas utilisés pour occulter la surface vitrée correspondante. Clairement, en revanche, une telle solution ne peut pas être envisagée lorsque le pavillon est intégralement, ou essentiellement, vitré.

Pour les surfaces vitrées réduites, et verticales ou sensiblement verticales, telles que les vitres arrières ou latérales du véhicule, on connaît également les stores à enrouleur, que l'on peut déployer pour se protéger du soleil. Il n'est malheureusement pas possible de transposer cette technique du store à enrouleur, et plus généralement de tous types de toiles d'occultation, à une surface de grande taille, non verticale, et qui plus est généralement non plane, tels que le sont par exemple les pavillons de véhicules actuels ou futurs.

En effet, si l'on développait horizontalement un store dont les dimensions pourraient être approximativement de 2 m en longueur, et de 1,5 m en largeur, pour occulter un pavillon vitré, la toile "pocherait", c'est-à-dire que ses bords latéraux se rapprocheraient légèrement l'un de l'autre, ce qui provoquerait un creux au centre la toile, des plis ou des froncements, et/ou baillerait, sous l'effet de la gravité. Cela serait bien sûr inacceptable, tant en ce qui concerne le simple aspect visuel et ergonomique que pour l'efficacité de l'occultation, la lumière pouvant alors passer le long des bords.

En outre, les pavillons des véhicules sont le plus souvent non plats mais au contraire incurvés ou galbés, au moins dans le sens de la longueur (notamment si la partie vitrée se prolonge vers l'arrière du véhicule) et également parfois dans le sens de la largeur. À nouveau, le déploiement d'une toile d'occultation ne serait alors ni efficace, ni ergonomique, ni esthétique.

Un dispositif d'occultation selon le préambule de la revendication 1 est connu de DE 197 45866 C.

L'invention a notamment pour objectif de pallier les différents inconvénients de l'état de l'art.

Plus précisément, un objectif de l'invention est de fournir un dispositif d'occultation d'une ou plusieurs surfaces vitrées et/ou baies ménagées dans un véhicule automobile, et notamment sur le pavillon de ce dernier (ou plus généralement sur toutes surfaces présentant une inclinaison importante par rapport à la verticale), permettant d'obtenir une occultation efficace, bien ajustée à la surface à occulter, tout en étant non visible, ou à tout le moins très discret, lorsque l'occultation n'est pas souhaitée.

Un autre objectif de l'invention est de fournir un tel dispositif d'occultation qui présente un aspect visuel de bonne qualité, lorsqu'il est déployé, notamment sans "poche" ou autres défauts dus à l'effet de la gravité.

L'invention a encore pour objectif de fournir un tel dispositif d'occultation, qui soit ergonomique, c'est-à-dire d'une part aisé à manipuler, et d'autre part qui n'occasionne aucune gêne pour les occupants du véhicule.

Un autre objectif de l'invention est de fournir un tel dispositif d'occultation, qui permette le cas échéant de procurer une occultation partielle de la surface vitrée, si cela est souhaité.

L'invention a également pour objectif de fournir un tel dispositif d'occultation, dont l'encombrement soit le plus réduit possible, notamment lorsqu'il est replié, afin qu'il puisse être aisément monté dans le véhicule.

Un autre objectif de l'invention est de fournir un tel dispositif d'occultation, qui soit simple et rapide à monter dans un véhicule.

Encore un autre objectif de l'invention est de fournir un tel dispositif d'occultation, qui soit peu coûteux à réaliser et à monter.

Ces objectifs, ainsi que d'autres qui apparaîtront par la suite, sont atteints à l'aide d'un dispositif d'occultation d'au moins une vitre et/ou d'au moins une baie d'un véhicule, mettant en oeuvre une toile d'occultation mobile entre une position repliée et une position déployée. Ce dispositif d'occultation comprend au moins une baleine de soutien et/ou de maintien dans une forme prédéterminée de ladite toile, lorsque cette dernière est déployée. Selon l'invention, la ou lesdites baleines sont désolidarisées de ladite toile, au moins lorsque cette dernière est repliée.

Ainsi, il est possible d'exploiter les avantages liés à une toile d'occultation souple, sans les inconvénients ou problèmes dus au fait que l'on étend horizontalement une toile de taille relativement importante. La présence de baleines (c'est-à-dire d'éléments s'étendant préférentiellement sensiblement perpendiculairement à la direction de déploiement et de repliement de la toile, et placées en des endroits adaptés pour supporter la toile et lui éviter de se déforme sous l'effet de la gravité), permet d'imprimer à la toile la forme voulue (par exemple en suivant sensiblement la forme du pavillon).

La désolidarisation des baleines permet un repliement de la toile aisé (non perturbé par les baleines), et l'ensemble replié peut donc être très compact.

Selon un aspect avantageux de l'invention, les extrémités de la ou desdites baleines circulent dans des rails de guidage. Ces rails peuvent également porter une barre de tirage de la toile.

Préférentiellement, ladite toile est montée sur un tube enrouleur. Le repliement et le déploiement sont alors simples et efficaces. D'autres techniques peuvent cependant être envisagées sans sortir du cadre de l'invention, basées par exemple sur un pliage adapté de la toile.

Selon un premier mode de réalisation avantageux de l'invention, chacune desdites baleines présente au moins un premier élément d'accrochage prévu pour coopérer avec au moins un second élément d'accrochage complémentaire associé à ladite toile, lors du déploiement, et s'en désolidariser lors du repliement.

Notamment, on peut prévoir qu'au moins une extrémité de chacune desdites baleines présente au moins un picot prévu pour s'inscrire dans une lumière correspondante ménagée dans le bord de ladite toile, ou inversement.

Plus généralement, tout moyen d'accrochage positif coopérant ave un moyen d'accrochage négatif correspondant peut être adapté, ainsi que tout autre moyen de solidarisation/désolidarisation adéquat.

Selon un aspect avantageux de l'invention, ledit premier élément d'accrochage, ou ledit picot, forme également élément de guidage dans un rail de maintien et/ou de guidage de la toile et/ou des baleines.

Avantageusement, lorsqu'elles sont désolidarisées de ladite toile, lesdites baleines sont stockées dans un magasin prévu à cet effet au voisinage de la zone de repliement de ladite toile.

Dans ce cas, le dispositif d'occultation comprend préférentiellement des moyens pour amener successivement en contact avec ladite toile chacune desdites baleines, lors du déploiement. Lesdits moyens pour amener en contact peuvent notamment comprendre au moins un doigt de remontée, sur lequel est appliquée une force de rappel.

De façon avantageuse, ledit magasin est formé dans la même pièce que des moyens de support d'un tube d'enroulement de ladite pièce. Le même ensemble peut encore comprendre les rails de guidage, de façon que le dispositif complet puisse être aisément monté avant sa mise en place dans le véhicule.

Préférentiellement, l'espacement entre deux baleines successives reste sensiblement constant lors du déploiement et du reploiement (sauf au voisinage de la position de repos desdites baleines).

Selon une autre approche avantageuse de l'invention, lesdites baleines sont reliées entre elles et à une barre de tirage de ladite toile, de façon que le déplacement de ladite barre de tirage lors du déploiement de la toile entraîne la mise en place progressive desdites baleines.

Ainsi, on prévoit avantageusement qu'une première baleine est reliée à ladite barre de tirage et chacune des autres baleines est reliée à la précédente, à l'aide d'un élément de liaison souple (tel qu'un câble).

De façon avantageuse, lesdites baleines ont des formes complémentaires, au moins au niveau de leurs extrémités, de façon qu'elles puissent au moins partiellement s'emboîter les unes dans les autres, en position repliée.

Notamment, lesdites baleines peuvent être conçues de façon qu'elles s'emboîtent, au moins partiellement, pour former un empilement gigogne.

Selon une autre approche avantageuse, le dispositif de l'invention comprend au moins une baleine s'étendant au-dessus de ladite toile, et des moyens agissant sur ladite toile pour la plaquer contre ladite baleine, lorsque le store est déployé.

On obtient ainsi un aspect esthétique intéressant, la ou les baleines n'étant pas visibles.

Avantageusement, lesdits moyens agissent sur la toile comprenant au moins un film et/ou un élément souple s'étendant au-dessus de ladite ou desdites baleines, et solidarisé :
à une première extrémité à la barre de tirage de ladite toile ou à une autre baleine ;
   à la seconde extrémité à ladite toile,
   de façon que ladite toile se tende en position déployée, plaquant ainsi ladite toile contre ladite baleine.

On peut notamment prévoir que la solidarisation d'au moins une desdites extrémités soit réalisée par soudage.

De façon préférentielle, le ou lesdits films et/ou éléments souples forment un ourlet autour de ladite barre de tirage.

Selon encore un autre aspect de l'invention, on prévoit que ladite ou lesdites baleines présentent une première partie s'étendant au-dessus de ladite toile, assurant la fonction de guidage et de mise en place de ladite baleine, et une seconde partie s'étendant au-dessous de ladite toile, assurant la fonction de maintien de ladite toile.

Dans le cas où les baleines restent solidaires de la toile, on prévoit avantageusement que la toile comprend des moyens permettant d'obtenir un rayon sensiblement constant de l'enroulement, lorsque la toile est repliée, ou partiellement repliée.

Notamment, lesdits moyens comprennent au moins une extension en un matériau souple, présentant sensiblement la même épaisseur que ladite baleine.

On peut également prévoir (que les baleines soient ou son solidaires de la toile) que ledit tube enrouleur porte au moins un élément support de la ou desdites baleines lorsque la toile est repliée et/ou en cours de repliement.

Par exemple, lesdits éléments de support comprennent deux bagues d'appui prévues pour recevoir les extrémités de la ou desdites baleines.

L'invention concerne également les véhicules automobiles en eux-mêmes, comprenant au moins un dispositif d'occultation tel que décrit ci-dessus, et notamment les véhicules automobiles dans lesquels ledit dispositif d'occultation s'étend au moins partiellement en regard du pavillon.

D'autres caractéristiques et avantages de l'invention apparaîtront plus clairement de la description suivante de différents modes de réalisation préférentielle de l'invention, et des dessins annexés, parmi les lesquelles :
- la figure 1a présente un premier mode de réalisation de l'invention, illustrant le principe général de cette dernière ;
- la figure 1b présente, en coupe, un store replié selon l'invention, lorsque les baleines sont solidaires de la toile ;
- la figure 2 illustre une variante de la figure la dans laquelle les rails de guidage et les baleines sont incurvés ;
- la figure 3 présente, en coupe, un premier mode de mise en oeuvre de baleines désolidarisables de la toile ;
- les figures 4a à 4e illustrent le principe d'un mode de fonctionnement du système de la figure 3 ;
- les figures 5a et 5b présentent deux variantes du guidage des baleines des figures 2a à 2e ;
- les figures 6a à 6d illustrent un second mode de mise en oeuvre des baleines indépendantes de la toile, dans lequel les baleines sont reliées entre elles par des éléments souples ;
- la figure 7 est un exemple de profil adapté pour les extrémités des baleines, facilitant leur empilement ;
- la figure 8 donne un exemple de baleines réalisées de façon qu'elles puissent former un empilement gigogne ;
- les figures 9a à 9d illustrent un troisième mode de mise en oeuvre de baleines indépendantes de la toile, dans lequel les baleines se déplacent le long d'ourlets formés sur la toile ;
- la figure 10 illustre un exemple de réalisation pour réduire le balourd d'une toile sur laquelle sont solidarisées des baleines ;
- les figures 11a et 11b illustrent un quatrième mode de réalisation dans laquelle les baleines sont indépendantes de la toile ;
- la figure 12 présente un store comprenant un tube d'enroulement doté de moyens pour supporter les baleines.

Le principe général de l'invention repose donc sur la mise en oeuvre d'un dispositif d'occultation amovible, destiné à occulter quand cela est nécessaire une surface importante d'un véhicule. Il peut notamment s'agir d'un pavillon intégralement ou en grande partie vitré, d'un pavillon équipé de plusieurs vitres et/ou toits ouvrants, ou encore d'un hayon de grande taille et fortement incliné.

En effet, comme déjà mentionné, le déploiement d'une toile d'occultation ne pose pas de problème lorsque celui-ci est réalisé verticalement ou sensiblement verticalement, comme cela est le cas pour des vitres latérales.

Il n'y a en général pas non plus de problème lorsque la surface de la toile déployée est relativement faible, la tension appliquée sur la toile par les moyens de rappel du tube d'enroulement étant suffisants pour que la toile reste plane.

En revanche, il apparaît clairement que cela n'est pas le cas si l'on déploie une telle toile pour occulter le pavillon d'une automobile. Pour cette raison, les techniques actuellement proposées sont basées sur des éléments rigides.

La solution proposée par l'invention, telle qu'illustrée en figure la, consiste quant à elle à prévoir un certain nombre de baleines, qui viennent soutenir une toile, lorsqu'elle est déployée.

Le dispositif illustré en figure la comprend donc une toile 11 montée, classiquement, sur un tube d'enroulement d'un store à enrouleur. Celui-ci peut être équipé de moyens de rappel de la toile, identique ou similaire à ceux que l'on trouve dans les stores à enrouleur classique, ou être motorisé.

Des rails 13₁ et 13₂ définissent la trajectoire d'une barre de tirage 14, solidarisée à l'extrémité libre de la toile.

Selon l'invention, le dispositif comprend encore des baleines 15, qui sont positionnées sous la toile déployée, de façon à la soutenir et empêcher qu'elle se déforme, et que les bords latéraux se rapprochent l'un de l'autre. Ces baleines 15 sont guidées par les rails13₁ et 13₂, de même que la barre de tirage 14. Elles sont réalisées sous la forme d'une barre ou d'une tige, suffisamment rigides pour supporter la toile. Il peut également s'agir d'un élément plus souple, tel qu'un élément en plastique (ou un câble) dès lors que ce dernier est suffisamment tendu.

Le nombre et l'espacement des baleines 15 sont choisis en fonction des caractéristiques de la toile, et de sa surface. Classiquement, dans le cas d'un pavillon, on prévoira un espacement compris entre 15 et 25 cm.

Bien que le système illustré soit un tube d'enroulement, il est clair que d'autres modes de repliement de la toile peuvent être envisagés, tel qu'un empilement de couches successives. Dans ce dernier cas, on peut prévoir des plis préformés sur la toile, facilitant le repliement et le dépliement.

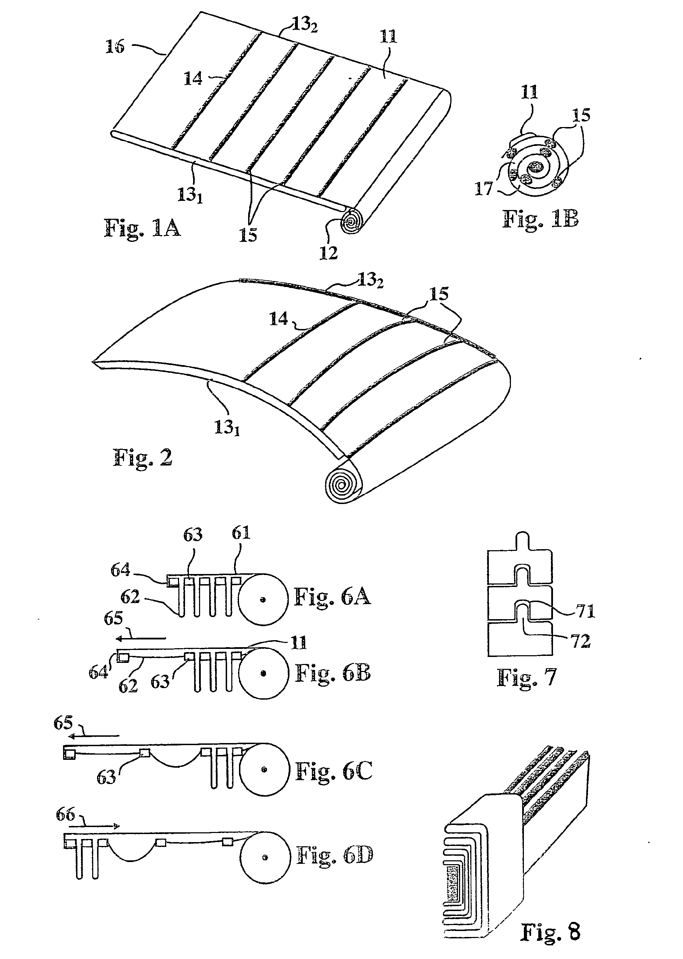

La figure 1a illustre un mode de réalisation simplifié, selon lequel la toile s'étend dans un plan. Il est clair cependant que cette approche peut être généralisée à des formes plus complexes, adaptées aux véhicules actuels, ainsi que cela est illustré dans l'exemple de la figure 2. Sur cet exemple, on a prévu que les rails 13₁ et 13₂ soient incurvés de façon à suivre le profil du pavillon. On notera que selon cette approche, il est aisé de prolonger les rails jusqu'à la vitre arrière du véhicule, et donc d'occulter simultanément le pavillon et cette vitre arrière avec le même store.

Les baleines 15 et la barre de tirage 14 sont également incurvées, toujours dans l'objectif de suivre le pavillon.

Enfin, il est possible que les rails de guidage 13₁ et 13₂ ne soient pas tout à fait parallèles. Dans ce cas, on prévoira des moyens permettant d'adapter automatiquement la longueur de la barre de tirage 14 et des baleines 15, par exemple en les réalisant sous la forme de deux éléments pouvant coulisser l'un dans l'autre. Il conviendra également, bien sûr, d'adapter la toile, par exemple en lui conférant une forme trapézoïdale ou en limitant sa largeur à la plus petite largeur définie par le dispositif.

Selon un mode réalisation simplifiée, les baleines 15 sont solidarisées à la toile 11 par soudure, la baleine étant gainée spécialement dans ce but.

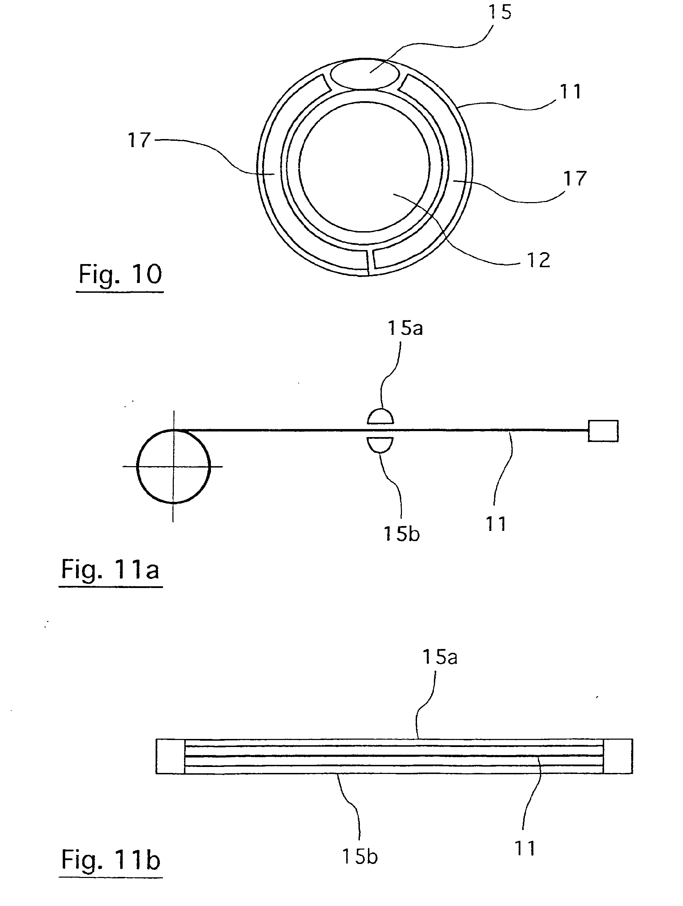

Dans ce cas, on peut constater une irrégularité de l'enroulement ou du déroulement, du fait de la surépaisseur engendrée localement par les baleines. Toufefois, de façon à réduire l'effet de balourd lors de l'enroulement ou du déroulement du store, des éléments souple 17, en mousse par exemple, peuvent être placés entre chacune des baleines 15. L'épaisseur des éléments en mousse 17 correspond sensiblement à la surépaisseur engendrée par une baleine 15 enroulée avec la toile 11. Ainsi, l'épaisseur sur une circonférence d'enroulement est sensiblement constante, comme cela est illustré sur la figure 10, qui donne une représentation en coupe d'un enroulement de toile 11 sur le tube enroulement 12.

Cependant, cette approche présente un inconvénient lorsque la toile est repliée, comme cela apparaît très clairement sur la vue en coupe de la figure 1b. En effet, outre le fait que les baleines peuvent empêcher un enroulement efficace, et l'ensemble replié occupe un espace non négligeable, généralement non disponible dans le pavillon d'un véhicule ou à son voisinage.

En outre, la présence de ces baleines risque de détériorer la toile, ou à tout le moins de la marquer. Ces problèmes sont encore plus importants dans le cas où les baleines sont incurvées, comme illustrées en figure 2. L'enroulement prend alors une forme de tonneau allongée.

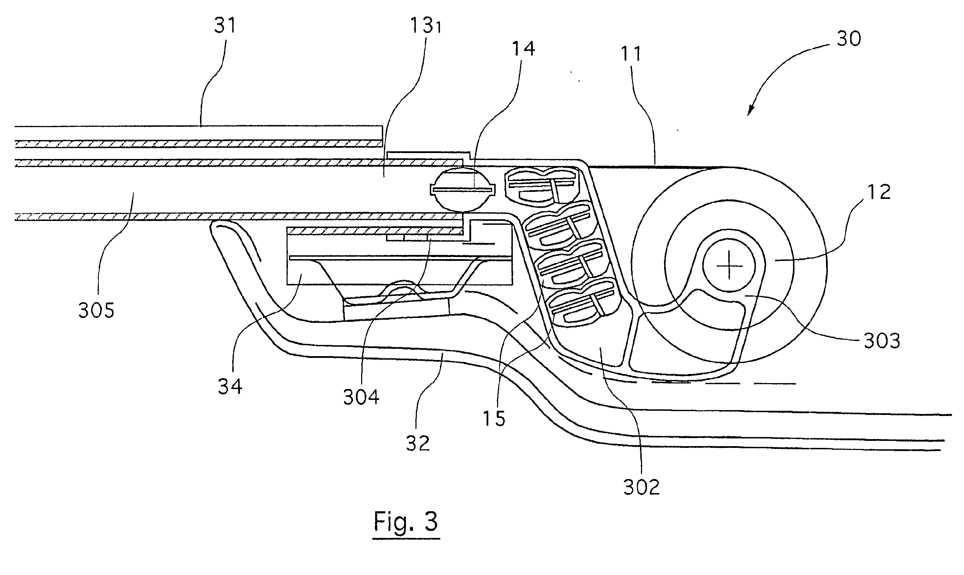

Selon un aspect avantageux de l'invention, on a donc prévu que les baleines 15 soient désolidarisées de la toile 11, au moins lorsque celle-ci est repliée. Un premier mode réalisation de cette technique est illustré par la vue en coupe de la figure 3.

Sur cette figure 3, on distingue une portion 31 du pavillon vitré du véhicule, ainsi qu'une portion 32 de la garniture intérieure du véhicule. Entre ces deux éléments est monté le dispositif 30 de l'invention.

Ce dispositif est avantageusement réalisé sous la forme d'un élément monobloc, prêt à être monté dans le véhicule. L'armature du dispositif comprend donc les rails 13₁ et 13₂, qui se prolongent par un magasin 302 dont l'utilisation est discutée plus en détail par la suite, puis par des moyens de support 303 du tube d'enroulement 12. A l'autre extrémité des rails de guidage 13₁ et 13₂, on peut prévoir un élément 16 (voir figure 1) maintenant constant l'écart entre les deux rails.

Le dispositif d'occultation 30 est solidarisé au véhicule, et par exemple à la garniture 32, à l'aide d'un crochet 304 coopérant avec des moyens de fixation 34.

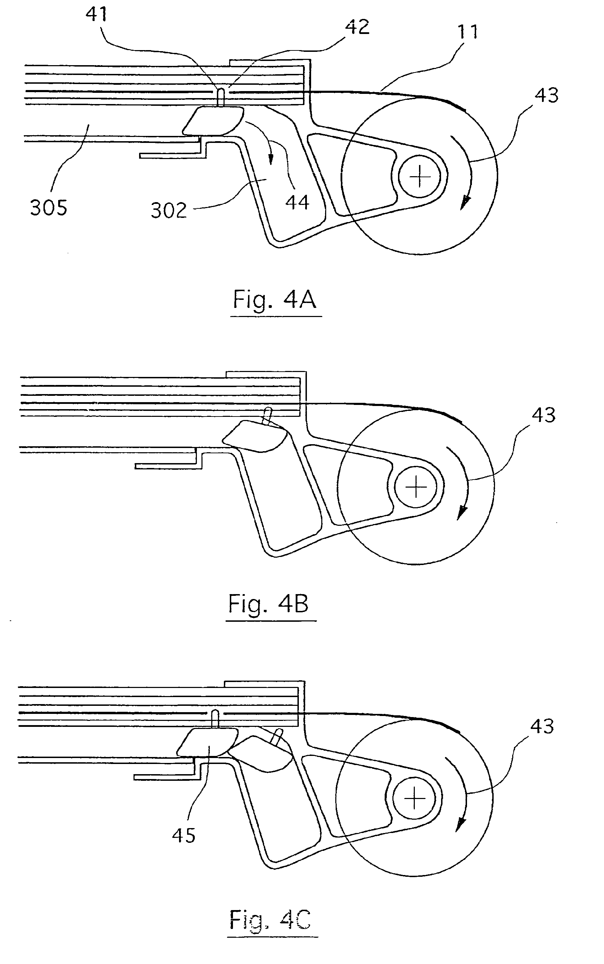

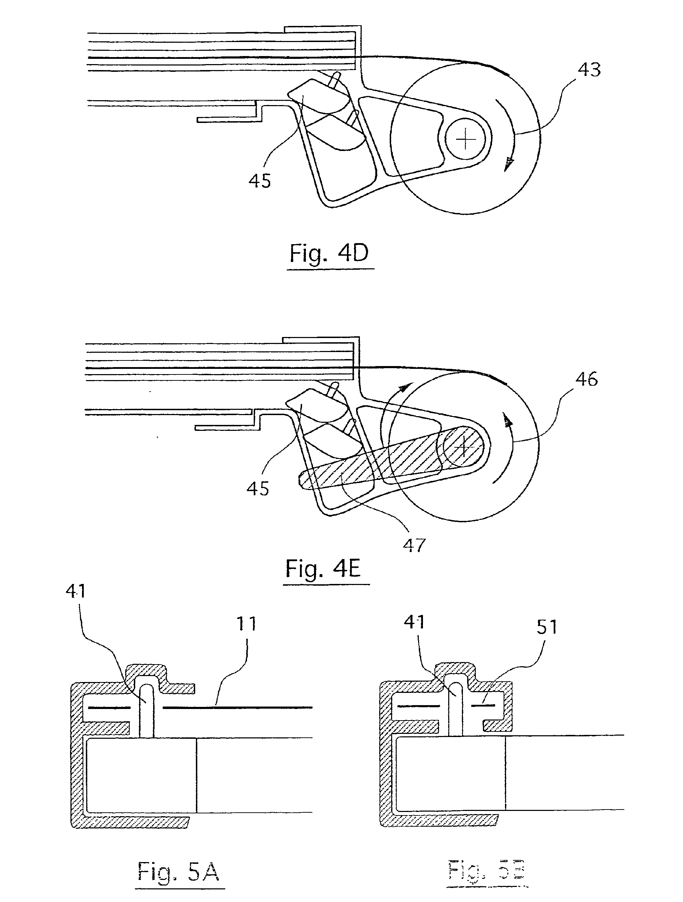

Selon cet aspect avantageux de l'invention, les baleines 15 sont logées dans un magasin 302, et donc non solidarisé à la toile 11, lorsque cette dernière est repliée (ou non complètement déployée). Lors du déploiement de la toile, les baleines 15 se solidarisent automatiquement et successivement à la toile, par exemple selon la technique illustrée par les figures 4a à 4e.

Sur ces figures, chaque baleine comprend, à au moins une de ses extrémités (mais préférentiellement aux deux extrémités) un doigt, ou picot, 41 pouvant coopérer avec une lumière 42 ménagée à cet effet dans le bord de la toile (voir figure 5a) ou dans une bande de guidage 51 se déployant simultanément à la toile (voir figure 5b). Lorsque la baleine se trouve dans la zone d'entraînement 305 du rail, elle est donc solidarisée à la toile 11, et assure son rôle de support.

Avantageusement, le doigt 42 circule dans un logement 52 prévu à cet effet dans le rail. Il assure ainsi, en outre une fonction de guidage de la baleine.

Si la toile 11 est en cours de repliement (flèche 43), la baleine est dirigée vers le magasin 302 (flèche 44). On se trouve alors dans la position d'échappement de la figure 4b, dans laquelle le doigt 41 s'est désolidarisé de la lumière 42 et donc de la toile 11. Cette dernière continue donc à s'enrouler autour du tube 12, indépendamment de la baleine. En poursuivant le repliement (43) de la toile arrive la baleine suivante 45, entraînée de la même façon, ainsi que cela est illustré par la figure 4c. A nouveau, cette baleine 45 va se trouver en position d'échappement, comme cela est illustré par la figure 4d, et pousser vers l'intérieur du magasin la première baleine.

Lors du déploiement de la toile (flèche 46), le même mécanisme est mis en oeuvre dans l'autre sens. Les baleines 45 sont guidées hors du magasin, pour venir se solidariser les unes après les autres à la toile.

Un doigt de remontée 47 des baleines est prévu, pour guider ses dernières hors du magasin, de façon qu'elles viennent automatiquement s'accrocher à la toile. Des moyens de rappel (non représentés) agissent sur ce doit de remontée.

Bien entendu, d'autres mécanismes peuvent être mis en oeuvre pour assurer la même fonction. Notamment, la forme du magasin et des extrémités des baleines peuvent être adaptées. Les moyens assurant la remontée et l'accrochage de ces baleines peuvent être de tout type adéquat (motorisés ou non).

En outre les moyens d'accrochage peuvent être inversés, les doigts d'accrochage étant prévus sur la toile, et les lumières (qui seront alors plutôt des trous borgnes) étant réalisés sur les baleines, ce qui facilite leur empilement. Plus généralement, la solidarisation entre la toile, ou la bande d'entraînements, et les baleines peuvent être de tout type adéquat (coopération entre ou moins un élément d'accrochage mâle et au moins un élément d'accrochage femelle, dispositif de type à bandes Velcro (marque déposée), aimant,...).

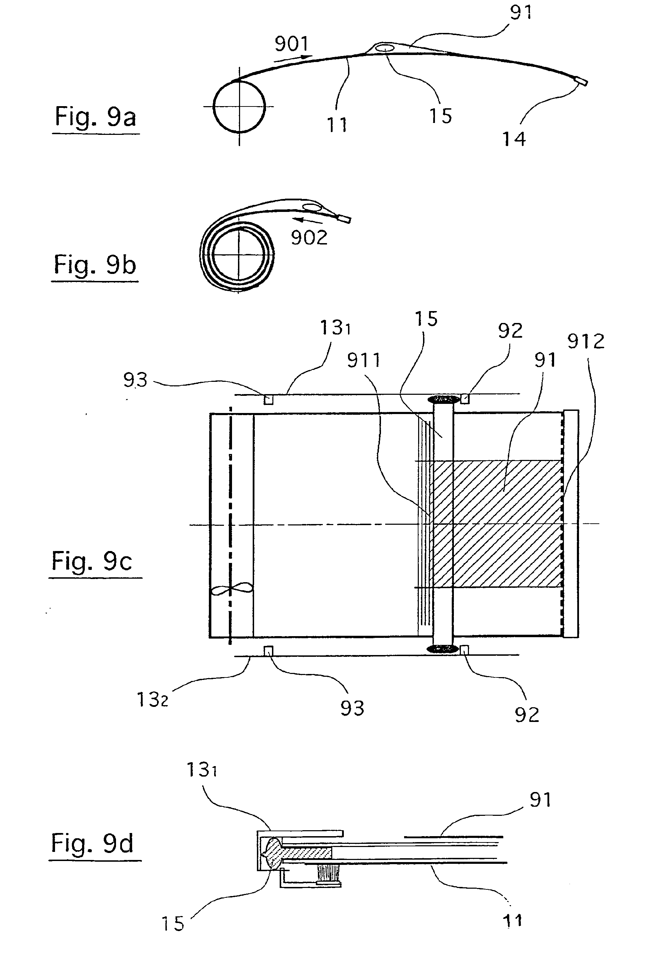

Selon un autre mode de réalisation de l'invention, les baleines peuvent n'être jamais directement solidarisées à la toile, mais simplement se déployer parallèlement à celle-ci, de façon à la supporter. Un exemple de réalisation dans ce sens est illustré dans les figures 6a à 6d dans ce cas, chaque baleine 61 est simplement solidarisée à la baleine qui la précède par un élément souple 62 (câble, chaînette, élément plastique,...) à au moins une de ses extrémités. La première baleine 63 est quant à elle solidarisée de la même façon à la barre de tirage 64.

Lorsque le store est en position repliée (figure 6a) toutes les baleines et la barre de tirage sont en contact les unes avec les autres (ou à proximité, ou emboîtées).

Lors du déploiement de la toile (flèche 65, figure 6b), la barre de tirage se déplace, entraînant d'une part la toile 11, et d'autre part le lien souple 62 la reliant à la barre 63.

Lorsque ce lien souple 62 est tendu (figure 6c), il entraîne la baleine 63, puis progressivement de toujours la même façon, les baleines suivantes.

Lors du repliement de la toile (figure 6d, flèche 66), le fonctionnement est symétrique.

D'autres systèmes d'entraînement, pas tringles et/ou par câbles, peuvent bien sûr être envisagés pour assurer le déploiement et le reploiement des baleines.

De façon à réduire l'encombrement général du dispositif, lorsque le store est en position repliée, on prévoie avantageusement que les baleines, ou à tout le moins les extrémités de celles-ci, puissent s'emboîter au moins partiellement les unes dans les autres.

Ainsi, notamment dans le cas discuté en relation avec les figures 4a à 4e, les baleines seront avantageusement configurées de façon que l'extrémité présente un logement 71 dans lequel vient s'encastrer le picot 72 de la baleine précédente, selon le principe illustré en figure 7.

On peut également prévoir avantageusement que les extrémités des baleines sont configurées de façon à pouvoir s'encastrer intégralement, ou à tout le moins en grande partie, dans les autres de façon à former en empilement gigogne, par exemple selon le principe illustré en figure 8.

Les figures 9a à 9d illustrent un deuxième exemple de réalisation dans lequel les baleines 15 ne sont pas directement solidarisées à la toile 11. Selon ce mode de réalisation, un film 91, pouvant être constitué d'un filet ou d'un tissu léger ou de tout autre matériau facilement enroulable, est solidarisée par une de ses extrémités 911 à la toile 11, par son extrémité 912 à la barre de tirage 14.

La solidarisation est par exemple obtenue par soudure du film 91 sur la toile 11. A son extrémité, le film 91 forme un ourlet autour de la barre de tirage 14.

Les bords du film 91, parallèles au sens de déroulement de la toile, sont libres, de telle sorte qu'une baleine 15 puisse être insérée et se déplacer facilement entre la toile 11 et le film 91. La baleine 15 aura alors une forme, de préférence arrondie, permettant de ne pas entraver le glissement du film 91 et de la toile 11 de part et d'autre de la baleine 15.

Au moins l'un des rails 13₁ et 13₂ porte une butée 93 destinée à stopper la course de la baleine 15 lors de l'enroulement de la toile 11.

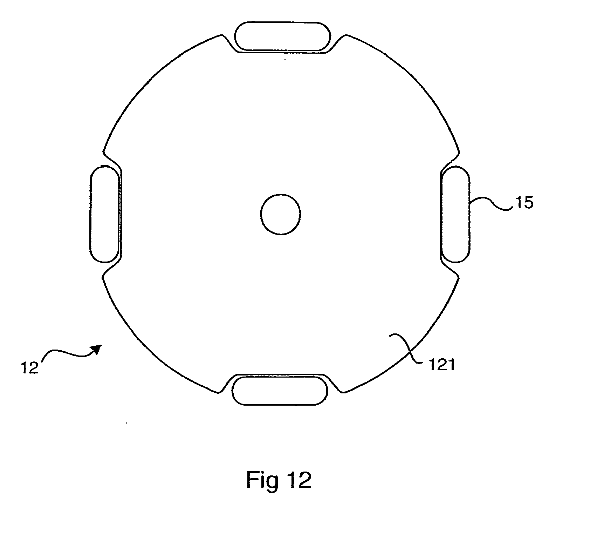

Ainsi lors du déploiement, la baleine 15 étant dans une position d'attente contre la butée 93 (ou stockée comme illustré en figure 12), le film 91, déplacé solidairement avec la toile 11 par la barre de tirage 14, entraîne la baleine 15 le long des rails 13₁ et 13₂ à partir du moment où l'extrémité 911 du film rencontre la baleine 15. En bout de course, la baleine arrive en butée contre l'élément 92 et le film 91 se tend et exerce une traction sur la toile 11 de telle sorte que celle-ci soit plaquée contre la baleine 15. Lors de l'enroulement, le film 91 et la toile 11 défilent de part et d'autre de la baleine 15, jusqu'à ce que la barre de tirage 14 rencontre et pousse la baleine contre la butée 93.

Une ou plusieurs autres baleines peuvent être ajoutées selon le même principe. Un film supplémentaire est solidarisé à la toile 11 par une de ses extrémités, à la baleine précédente par l'autre de ses extrémités.

Lors du déploiement, le déplacement d'une seconde baleine s'effectue de la même manière que pour la première, l'effet de placage de la toile contre la baleine étant à nouveau obtenu en bout de course. Lors de l'enroulement, le film supplémentaire et la toile 11 défilent de part et d'autre de la seconde baleine, jusqu'à ce que la première baleine (poussée par la barre de tirage) rencontre et entraîne la seconde baleine contre la butée 93.

Ainsi que cela est illustré en figure 12, le tube d'enroulement 12 peut être pourvu de moyens destinés à supporter les baleines lorsque la toile est totalement enroulée ou pendant son enroulement. De façon avantageuse, le tube d'enroulement 12 porte une bague 12 à chacune de ses extrémités. Ces bagues ont un diamètre légèrement supérieur au diamètre maximum que peut avoir le tube 12 une fois que la toile y est totalement enroulée. Des encoches 122 peuvent être prévues, pour recevoir et maintenir les baleines.

Ainsi les baleines 15 au voisinage du tube d'enroulement sont supportées par chacune de ses extrémités par les bagues.

Bien entendu, cette technique peut être mise en oeuvre dans d'autres modes de réalisation du guidage de baleines, et notamment ceux décrits précédemment.

Selon encore un autre exemple de réalisation, illustré par les figures 11a et 11b dans lequel les baleines ne sont pas directement solidarisées sur la toile, on prévoit que les baleines 15 comprennent une partie supérieure 15a et une partie inférieure 15b, un espace étant ménagé entre les deux parties pour former un passage pour la toile 11.

La partie 15a assure donc la fonction de mise en place de la baleine et de guidage dans les rails, la partie 15b étant solidarisé à la partie 15a par des patins de glissement à chaque extrémité de la baleine ainsi formée. L'entraînement peut être effectué de diverses manières, et notamment celles déjà décrites.

La partie 15b assure de son côté la fonction de maintien de la toile 11. Il peut s'agir d'une barre, d'une tige, voire d'un simple câble.

## Revendications

1. Dispositif d'occultation d'au moins une vitre et/ou d'au moins une baie d'un véhicule, mettant en oeuvre une toile d'occultation (11) mobile entre une position repliée et une position déployée, et comprenant au moins une baleine (15) de soutien et/ou de maintien dans une forme prédéterminée de ladite toile, lorsque cette dernière est déployée,
**caractérisé en ce que** la ou lesdites baleines sont désolidarisées de ladite toile (11), au moins lorsque cette dernière est repliée.

2. Dispositif d'occultation selon la revendication 1, **caractérisé en ce que** la ou lesdites baleines (15) s'étendent sensiblement perpendiculairement à l'axe de déploiement de ladite toile.

3. Dispositif d'occultation selon l'une quelconque des revendications 1 et 2, **caractérisé en ce que** les extrémités de la ou desdites baleines circulent dans des rails de guidage (13₁), (13₂).

4. Dispositif d'occultation selon l'une quelconque des revendications 1 à 3, **caractérisé en ce que** ladite toile est montée sur un tube enrouleur (12).

5. Dispositif d'occultation selon l'une quelconque des revendications 1 à 4, **caractérisé en ce que** chacune desdites baleines (15) présente au moins un premier élément d'accrochage prévu pour coopérer avec au moins un second élément d'accrochage complémentaire associé à ladite toile (11), lors du déploiement, et s'en désolidariser lors du repliement.

6. Dispositif d'occultation selon la revendication 5, **caractérisé en ce qu'**au moins une extrémité de chacune desdites baleines (15) présente au moins un picot (41) prévu pour s'inscrire dans une lumière (42) correspondante ménagée dans le bord de ladite toile (11), ou inversement

7. Dispositif d'occultation selon l'une quelconque des revendications 5 et 6, **caractérisé en ce que** ledit premier élément d'accrochage, ou ledit picot (41), forme également élément de guidage dans un rail (13₁), (13₂) de maintien et/ou de guidage de la toile (11) et/ou des baleines (15).

8. Dispositif d'occultation selon l'une quelconque des revendications 1 à 7, **caractérisé en ce que**, lorsqu'elles sont désolidarisées de ladite toile (11), lesdites baleines (15) sont stockées dans un magasin (302) prévu à cet effet au voisinage de la zone de repliement de ladite toile.

9. Dispositif d'occultation selon la revendication 8, **caractérisé en ce qu'**il comprend des moyens pour amener successivement en contact avec ladite toile (11) chacune desdites baleines (15), lors du déploiement.

10. Dispositif d'occultation selon la revendication 9, **caractérisé en ce que** lesdits moyens pour amener en contact comprennent au moins un doigt de remontée (47), sur lequel est appliquée une force de rappel.

11. Dispositif d'occultation selon l'une quelconque des revendications 8 à 10, **caractérisé en ce que** ledit magasin (302) est formé dans la même pièce que des moyens de support (303) d'un tube d'enroulement (12) de ladite pièce.

12. Dispositif d'occultation selon l'une quelconque des revendications 1 à 11, **caractérisé en ce que** l'espacement entre deux baleines (15) successives reste sensiblement constant lors du déploiement et du reploiement, sauf au voisinage de la position de repos desdites baleines.

13. Dispositif d'occultation selon l'une quelconque des revendications 1 à 12, **caractérisé en ce que** lesdites baleines (15) sont reliées entre elles et à une barre de tirage (14) de ladite toile (11), de façon que le déplacement de ladite barre de tirage lors du déploiement de la toile entraîne la mise en place progressive desdites baleines.

14. Dispositif d'occultation selon la revendication 13, **caractérisé en ce qu'**une première baleine (15) est reliée à ladite barre de tirage (14) et chacune des autres baleines (15) est reliée à la précédente, à l'aide d'un élément de liaison souple (62).

15. Dispositif d'occultation selon l'une quelconque des revendications 1 à 14, **caractérisé en ce que** lesdites baleines (15) ont des formes complémentaires, au moins au niveau de leurs extrémités, de façon qu'elles puissent au moins partiellement s'emboîter les unes dans les autres, en position repliée.

16. Dispositif d'occultation selon la revendication 15, **caractérisé en ce que** lesdites baleines (15) s'emboîtent de façon à former un empilement gigogne.

17. Dispositif d'occultation selon l'une quelconque des revendications 1 à 16, **caractérisé en ce qu'**il comprend au moins une baleine s'étendant au-dessus de ladite toile, et des moyens agissant sur ladite toile pour la plaquer contre ladite baleine, lorsque le store est déployé.

18. Dispositif d'occultation selon la revendication 17, **caractérisé en ce que** lesdits moyens agissant sur la toile comprennent au moins un film et/ou un élément souple s'étendant au-dessus de ladite ou desdites baleines (15), et solidarisé :
- à une première extrémité à la barre de tirage (14) de ladite toile (11) ou à une autre baleine ;
- à la seconde extrémité à ladite toile (11),
de façon que ladite toile (11) se tende en position déployée, plaquant ainsi ladite toile (11) contre ladite baleine (15).

19. Dispositif d'occultation selon la revendication 18, **caractérisé en ce que** la solidarisation d'au moins une desdites extrémités est réalisée par soudage.

20. Dispositif d'occultation selon l'une quelconque des revendications 18 et 21, **caractérisé en ce que** le ou lesdits films et/ou éléments souples forment un ourlet autour de ladite barre de tirage.

21. Dispositif d'occultation selon l'une quelconque des revendications 17 à 20, **caractérisé en ce que** ladite ou lesdites baleines présentent une première partie s'étendant au-dessus de ladite toile (11), assurant la fonction de guidage et de mise en place de ladite baleine, et une seconde partie s'étendant au-dessous de ladite toile, assurant la fonction de maintien de ladite toile (11).

22. Véhicule automobile, **caractérisé en ce qu'**il comprend au moins un dispositif d'occultation selon l'une quelconque des revendications 1 à 21.

23. Véhicule automobile selon la revendication 22, **caractérisé en ce que** ledit dispositif d'occultation s'étend au moins partiellement en regard du pavillon.

## Claims

1. Shading device for at least one window and/or for at least one vehicle opening, using a shading cloth (11) movable between a withdrawn position and a deployed position, and comprising at least one rib (15) for supporting and/or maintaining the said cloth in a predetermined shape when the said cloth is deployed,
**characterised in that** the said rib(s) are detached from the said cloth (11) at least when the latter is withdrawn.

2. Shading device according to Claim 1, **characterised in that** the said rib(s) (15) extend substantially perpendicularly to the axis of deployment of the said cloth.

3. Shading device according to either one of Claims 1 and 2, **characterised in that** the ends of the said ribs travel in guide rails (13₁), (13₂).

4. Shading device according to any one of Claims 1 to 3, **characterised in that** the said cloth is mounted on a winding tube (12).

5. Shading device according to any one of Claims 1 to 4, **characterised in that** each of the said ribs (15) has at least one first catching element provided to cooperate with at least one complementary second catching element associated with the said cloth (11) during the deployment, and to become detached therefrom during the withdrawal.

6. Shading device according to Claim 5, **characterised in that** at least one end of each of the said ribs (15) has at least one pin (41) provided to fit into a corresponding aperture (42) made in the edge of the said cloth (11), or vice versa.

7. Shading device according to either one of Claims 5 and 6, **characterised in that** the said first catching element, or the said pin (41), also forms an element for guiding in a rail (13₁), (13₂) for holding and/or guiding the cloth (11) and/or the ribs (15).

8. Shading device according to any one of Claims 1 to 7, **characterised in that**, when they are detached from the said cloth (11), the said ribs (15) are stored in storagearea (302) provided therefor in the vicinity of the area for withdrawal of the said cloth.

9. Shading device according to Claim 8, **characterised in that** it comprises means for bringing each of the said ribs (15) successively into contact with the said cloth (11) during the deployment.

10. Shading device according to Claim 9, **characterised in that** the said means for bringing into contact comprise at least one lifting piece (47), to which a restoring force is applied.

11. Shading device according to any one of Claims 8 to 10, **characterised in that** the said storagearea (302) is formed in the same component as support means (303) of a winding tube (12) of the said component.

12. Shading device according to any one of Claims 1 to 11, **characterised in that** the spacing between two successive ribs (15) remains substantially constant during the deployment and the withdrawal, except in the vicinity of the rest position of the said ribs.

13. Shading device according to any one of Claims 1 to 12, **characterised in that** the said ribs (15) are connected to one another and to a drawing bar (14) of the said cloth (11) , so that the displacement of the said drawing bar during the deployment of the cloth causes the said ribs to be put in place progressively.

14. Shading device according to Claim 13, **characterised in that** a first rib (15) is connected to the said drawing bar (14) and each of the other ribs (15) is connected to the preceding one, with the aid of a flexible connecting element (62).

15. Shading device according to any one of Claims 1 to 14, **characterised in that** the said ribs (15) have complementary shapes, at least at their ends, so that they can at least partly fit into one another in the withdrawn position.

16. Shading device according to Claim 15, **characterised in that** the said ribs (15) fit into one another so as to form a nested stack.

17. Shading device according to any one of Claims 1 to 16, **characterised in that** it comprises at least one rib extending above the said cloth, and means acting on the said cloth to lay it flat against the said rib when the blind is deployed.

18. Shading device according to Claim 17, **characterised in that** the said means acting on the cloth comprise at least one film and/or a flexible element extending above the said rib(s) (15), and attached:
- at a first end to the drawing bar (14) of the said cloth (11) or to another rib;
- at the second end to the said cloth (11),
so that the said cloth (11) becomes tight in the deployed position, thus laying the said cloth (11) flat against the said rib (15).

19. Shading device according to Claim 18, **characterised in that** the attachment of at least one of the said ends is effected by welding.

20. Shading device according to either one of Claims 18 and 21, **characterised in that** the said film(s) and/or flexible elements form a hem around the said drawing bar.

21. Shading device according to any one of Claims 17 to 20, **characterised in that** the said rib(s) have a first part extending above the said cloth (11), ensuring the function of guiding and putting in place the said rib, and a second part extending below the said cloth, ensuring the function of holding the said cloth (11).

22. Motor vehicle, **characterised in that** it comprises at least one shading device according to any one of Claims 1 to 21.

23. Motor vehicle according to Claim 22, **characterised in that** the said shading device extends at least partly opposite the roof.

## Patentansprüche

1. Vorrichtung zum Abdecken mindestens einer Fensterscheibe und/oder mindestens einer Öffnung eines Kraftfahrzeuges, wobei eine Verdeckungsstoffbahn (11) zum Einsatz kommt, die zwischen einer zusammengefalteten und einer entfalteten Position beweglich ist und mindestens ein Stütz- und/oder Haltestab (15) in einer vorgegebenen Form der besagten Stoffbahn aufweist, wenn letztere entfaltet ist,
**dadurch gekennzeichnet, dass** der besagte Stab bzw. die besagten Stäbe von der Stoffbahn (11) getrennt wird (werden), zumindest wenn diese zusammengefaltet ist.

2. Abdeckvorrichtung nach Anspruch 1,
**dadurch gekennzeichnet, dass** der besagte Stab bzw, die besagten Stäbe (15) sich in etwa senkrecht zur Entfaltungsachse der Stoffbahn erstreckt bzw. erstrecken.

3. Abdeckvorrichtung nach einem der Ansprüche 1 oder 2,
**dadurch gekennzeichnet, dass** die Enden des besagten Stabes bzw. der besagten Stäbe in Führungsschienen (13₁), (13₂) laufen.

4. Abdeckvorrichtung nach einem der Ansprüche 1 bis 3,
**dadurch gekennzeichnet, dass** die Stoffbahn auf einer RolloRohr (12) aufgezogen ist.

5. Abdeckvorrichtung nach einem der Ansprüche 1 bis 4,
**dadurch gekennzeichnet, dass** jeder der gesagten Stäbe (15) mindestens ein erstes Element zum Anhängen aufweist, das mit einem zweiten, der Stoffbahn (11) zugeordneten komplementären Element zum Anhängen beim Entfalten der Stoffbahn zusammenwirken soll und sich von ihr trennen, wenn sie zusammengefaltet wird.

6. Abdeckvorrichtung nach Anspruche 5,
**dadurch gekennzeichnet, dass** mindestens ein Ende eines jeden der Stäbe (15) mindestens einen Prickelnanordnung (41) aufweist, der in eine im Rand der Stoffbahn (11) praktizierte Aussparung (42) passen soll oder umgekehrt.

7. Abdeckvorrichtung nach einem der Ansprüche 6 oder 6,
**dadurch gekennzeichnet, dass** das erste Element zum Anhängen oder der Nippel (41) ebenfalls das Führungselement in einer Schiene (13₁), (13₂) bildet, welche die Stoffbahn (11) und/oder die Stäbe (15) stützen und/oder halten.

8. Abdeckvorrichtung nach einem der Ansprüche 1 bis 7,
**dadurch gekennzeichnet, dass** wenn sie von der Stoffbahn (11) getrennt sind, die Stäbe (15) in einem zu diesem Zweck in der Nähe des Zusammenfaltungsbereiches der Stoffbahn vorgesehenes Behältnis (302) aufbewahrt werden.

9. Abdeckvorrichtung nach Anspruch 8,
**dadurch gekennzeichnet, dass** sie über Mittel verfügt, um bei der Entfaltung jeden der Stäbe (15) nacheinander mit der Stoffbahn in Berührung zu bringen.

10. Abdeckvorrichtung nach Anspruch 9,
**dadurch gekennzeichnet, dass** die besagten Mittel um in Berührung zu bringen mindestens einen Stift (47) zum Hochfahren aufweisen, auf dem eine Rückholkraft wirkt.

11. Abdeckvorrichtung nach einem der Ansprüche 8 bis 10,
**dadurch gekennzeichnet, dass** das Behältnis (302) im selben Teil wie die Stützmittel (303) einer RolloRohr (12) ausgebildet ist.

12. Abdeckvorrichtung nach einem der Ansprüche 1 bis 11,
**dadurch gekennzeichnet, dass** der Abstand zwischen zwei aufeinander folgende Stäbe (15) beim Entfalten und beim Zusammenfalten in etwa konstant bleibt, ausgenommen in der Nähe der Ruhestellung der Stäbe.

13. Abdeckvorrichtung nach einem der Ansprüche 1 bis 12,
**dadurch gekennzeichnet, dass** die Stäbe (15) untereinander und mit einer Ziehungschiene (14) der Stoffbahn (11) verbunden sind, so dass die Bewegung dieser Ziehungschiene beim Entfalten der Stoffbahn nacheinander das Einsetzen der Stäbe an ihren Platz bewirkt.

14. Abdeckvorrichtung nach Anspruch 13,
**dadurch gekennzeichnet, dass** ein erster Stab (15) mit der Ziehungschiene (14) verbunden ist und dass jeder andere Stab (15) mit dem vorgehenden mit Hilfe eines biegsamen Verbindungselementes (62) verbunden ist.

15. Abdeckvorrichtung nach einem der Ansprüche 1 bis 14,
**dadurch gekennzeichnet, dass** die Stäbe (15) zumindest an ihren Enden untereinander komplementäre Formen aufweisen, so dass sie in der zusammengefalteten Stellung zumindest teilweise ineinander verschachtelt werden können.

16. Abdeckvorrichtung nach Anspruch 15,
**dadurch gekennzeichnet, dass** die Stäbe (15) so ineinander passen, dass sie eine teleskopische Stapelung bilden.

17. Abdeckvorrichtung nach einem der Ansprüche 1 bis 16,
**dadurch gekennzeichnet, dass** sie mindestens einen Stab aufweist, der sich oberhalb der Stoffbahn erstreckt sowie Mittel, die auf diese Stoffbahn wirken, um sie gegen den Stab zu drücken, wenn das Rollo entfaltet ist.

18. Abdeckvorrichtung nach Anspruch 17,
**dadurch gekennzeichnet, dass** die auf die Stoffbahn wirkende Mittel mindestens eine dünne Schicht und/oder ein biegsames Element aufweisen, das sich oberhalb des Stabes bzw. der Stäbe (15) erstreckt und verbunden ist mit:
- einem ersten Ende der Ziehungschiene (14) der Stoffbahn (11) oder mit einem anderen Stab;
- dem zweiten Ende der Stoffbahn (11),
so dass diese Stoffbahn (11) in der entfalteten Position gespannt wird, wodurch die Stoffbahn (11) gegen den Stab (15) gedrückt wird.

19. Abdeckvorrichtung nach Anspruch 18,
**dadurch gekennzeichnet, dass** die Verbindung von mindestens einem der besagten Enden durch Schweißen erfolgt.

20. Abdeckvorrichtung nach einem der Ansprüche 18 oder 21,
**dadurch gekennzeichnet, dass** der oder die dünne Schicht(en) und/oder die biegsamen Elemente einen Saum um die Ziehungschiene bilden.

21. Abdeckvorrichtung nach einem der Ansprüche 17 bis 20,
**dadurch gekennzeichnet, dass** der Stab oder die Stäbe einen ersten Teil aufweist bzw. aufweisen, der sich oberhalb der Stoffbahn (11) erstreckt und die Führung und Positionierung des Stabes gewährleistet und einen zweiten Teil, der sich unterhalb der Stoffbahn erstreckt und das Halten der Stoffbahn (11) sicherstellt.

22. Kraftfahrzeug,
**dadurch gekennzeichnet, dass** es mindestens eine Abdeckvorrichtung nach einem der Ansprüche 1 bis 21 aufweist.

23. Kraftfahrzeug nach Anspruch 22,
**dadurch gekennzeichnet, dass** die Abdeckvorrichtung sich zumindest teilweise am Autodach entlang erstreckt.
